# EUROPÄISCHE PATENTSCHRIFT

(11) **EP 1 149 761 B1**
(45) Veröffentlichungstag und Bekanntmachung des Hinweises auf die Patenterteilung: **12.04.2006**
(21) Anmeldenummer: 01109291.3
(22) Anmeldetag: 17.04.2001
(51) Int. Cl.: B64C 23/06, B64C 21/10

(54) **Einrichtung zur Lärmminderung an Tragflügeln von Flugzeugen**
Noise damping device for aircraft wings
Dispositif de réduction du bruit sur les ailes d'aéronefs

(30) Priorität: 25.04.2000 DE 10020177
(43) Veröffentlichungstag der Anmeldung: 31.10.2001
(73) Patentinhaber: Airbus Deutschland GmbH, 21129 Hamburg (DE)
(72) Erfinder: Borchers, Ingo, Dr.Ing., 88690 Uhldingen-Mühlhofen (DE); Drobietz, Roger, Dipl.-Ing., 88682 Salem-Grasbeuren (DE); Grünewald, Michael, Dr.rer.nat., 85635 Höhenkirchen (DE); Mau, Kurt, Dipl-Phys., 22339 Hamburg (DE); Reichenberger, Johann, Dr.Ing., 83404 Ainring (DE)
(74) Vertreter: Hansmann, Dierk

(56) Entgegenhaltungen:
- DE-A- 3 710 691
- DE-U- 9 419 119
- US-A- 5 253 828
- US-A- 5 845 877

## Beschreibung

Die Erfindung betrifft eine Stellfläche mit Wirbelgeneratoren zur Lärmminderung an Tragflügeln von Flugzeugen, beispielsweise an Hochauftriebs-Klappen oder Vorflügeln.

Der Lärm von Flugzeugen im Fluge entsteht zum nicht geringen Anteil durch die Luftströmung an der Außenkontur des Flugzeugs. Dieser Lärm-Anteil wirkt sich besonders im Landeanflug störend auf die Umgebung aus, da durch ausgefahrene Hochauftriebs-Klappen zusätzliche Lärmquellen am Flugzeug entstehen und die Lärmwirkung zudem in geringer Flughöhe auftritt.

Nach dem Stand der Technik sind Strömungsstabilisatoren in Form von Winglets bekannt, deren Lärmmindenings-Effekt jedoch sehr gering ist.

Außerdem ist aus der Druckschrift "US-A 5,253,828" eine Einrichtung mit Wirbelgeneratoren bekannt, die an den vorderen Endkanten eines Hauptelements des Tragflügels eines Flugzeuges positioniert sind. Die Wirbelgeneratoren werden aus einer Mehrzahl länglicher Elemente gebildet, die als Leitelemente verwendet werden und vom Tragflügel wegragen. Mit dieser Maßnahme wird der Zweck verfolgt, den maximalen Auftrieb eines Flügels zu erhöhen, wobei jene Wirbelgeneratoren, die eben an einer Profilfläche einer Stellfläche vorgesehen werden, sich über zumindest einen Abschnitt der Profiltiefe der Hochauftriebs-Klappe erstrecken und auf der Saug- und auf der Druckseite der Stellfläche angebracht werden, die neben dem Randwirbel zusätzlich mehrere Längswirbel erzeugen werden. Diese Längswirbei werden die aerodynamische Energie in der Grenzschicht erhöhen, wodurch der Ablöseprozess stromabwärts verschoben wird. Dadurch wird ein maximaler Auftrieb erhöht.

Diese Einrichtung mit jenen Wirbelgeneratoren wird vordergründig nicht zur Lärmreduzierung dienen, obwohl möglicherweise ein Fachmann darüber nachdenken würde, ob man, obzwar druckschriftlich nicht explizit ausgeführt, durch jenen geschilderten Prozess mit jenen berücksichtigten Maßnahmen gegebenenfalls auch eine Lärmminderung erzeugen könnte.

Allerdings scheint die Umsetzung einer lärmmindemden Wirkung mit jenem derartig positionierten Wirbelgenerator zweifeihaft, da letztere in einer stark beschleunigten Strömung im Spalt zwischen einem Vor- und einem Hauptflügel angebracht werden.

Sofern man bedenkt, dass die Spaltströmung höchst sensibel auf Störungen reagieren wird, und es einem Fachmann allgemein bekannt ist, dass die Halter der Vorflügel, welche in ähnlicher Weise in diese Strömung ragen, einen wesentlichen Beitrag zur Lärmabstrahlung des Vorflügels liefern werden, dann lässt sich schlussfolgern, dass Wirbelgeneratoren, die in diesem Bereich eines Tragflügels angeordnet werden, mit ziemlicher Sicherheit zu einer Erhöhung des Fluglärms führen werden.

Demzufolge liegt der Erfindung die Aufgabe zugrunde, eine Stellfläche mit Wirbelgeneratoren bereitzustellen, mit welcher der Lärm von Flugzeugen aufgrund ausgefahrener Stellflächen wirksam reduziert wird.

Diese Aufgabe wird durch die im Anspruch 1 angegebenen Maßnahmen gelöst. In den weiteren Ansprüchen sind zweckmäßige Ausgestaltungen dieser Maßnahmen angegeben.

Bei einer bevorzugten Ausführungsform der Erfindung sind an der inneren und / oder äußeren Profilendfläche jener Stellfläche und insbesondere an einer Klappe Wirbelgeneratoren vorgesehen, durch die das im Flug entstehende Wirbelsystem beeinflusst wird, das aus einem entlang dem Spalt zwischen dem Flügel und den Stellflächen verlaufenden, verhältnismäßig großen Wirbel, dem Hauptwirbel, gebildet wird. Durch die Wirbelgeneratoren werden, eine größere Anzahl kleiner Wirbel gebildet, welche dem Hauptwirbel Energie entziehen ohne die Wirkung der Stellfläche bzw. der Auftnebswirkung der Hochauftriebs-Klappe zu stark zu verringem.

Der in das Femfeld abgestrahlte Lärm, der aufgrund der Wechselwirkung der verschiedenen Wirbelsysteme mit der Oberfläche der Klappe und der Wappen-Seitenfläche entsteht, ist geringer als bei dem ohne die Wirbelgeneratoren ungestörten, großräumigeren Wirbelsystem.

Ein Vorteil der Erfindung ist, dass mit verhältnismäßig geringem konstruktivem Aufwand eine deutliche Lärm-Minderung erreicht wird. Dabei ist es insbesondere vorteilhaft, dass die Wirbelgeneratoren an Faktoren wie Flügel-Geometrie, ausgewählte Flugzustände mit geringem Aufwand anpassbar sind, so dass sich für verschiedene Anwendungsfälle eine effiziente Lärm-Minderung ergibt.

Ein weiterer Vorteil der Erfindung ist, dass die Wirbelgeneratoren, die an jener Stellfläche angeordnet werden, wenig Gewicht aufweisen werden und auch sonst kaum negative Auswirkungen auf die Leistung des Flugzeugs haben.

Im folgenden wird die Erfindung anhand der beigegebenen Figuren beschrieben. Es zeigen
- Figur 1: eine perspektivische Darstellung eines Flügels mit einer Stellfläche in Form einer Landeklappe, die mit einer Ausführungsform der Anordnung an Wirbelgeneratoren versehen ist;
- Figur 2: eine Draufsicht auf den Flügel mit der Hochauftriebs-Klappe nach der Figur 1, wobei sich die Hochauftriebs-Klappe im teilweise ausgefahrenen Zustand befindet;
- Figur 3: eine Seitenansicht der Stellfläche mit drei Wirbelgeneratoren.

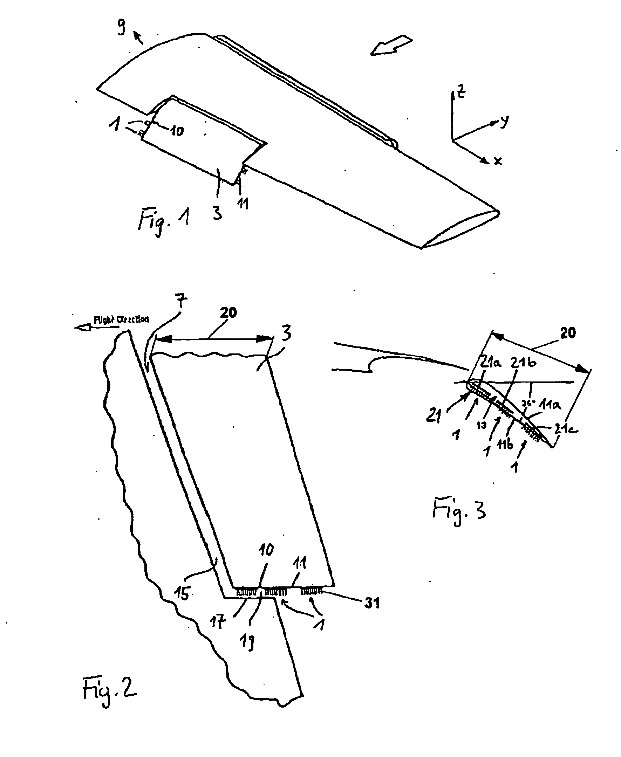

Die Wirbelgeneratoren 1 sind an einer Stellfläche, z. B. einer Hochauftriebs-Klappe 3 einer Tragfläche oder eines Flügels 5 angeordnet, zu deren näherer Bestimmung in der Figur 1 ein kartesisches Koordinatensystem mit einer x-, y- und z-Richtung angegeben ist, wobei die y-Richtung die Flügel-Längsrichtung definiert. Als Stellflächen kommen Klappen jeder Art am Flügel eines Flugzeugs in Betracht, also z.B. Spoiler, Landeklappen. Vorflügel, Seitenruder oder Querruder.

Die in der Figur 1 dargestellte Stellfläche ist eine ausfahrbare Landeklappe 3, die sich zumindest abschnittsweise über die Länge des Flügels 5 erstreckt. Bei derartigen Landeklappen bildet sich im Fluge ein Wirbel im Bereich des Übergangs 7 vom Flügel 5 auf die Landeklappe 3 aus, der typischerweise als Unstetigkeit oder Krümmungsänderung der Außenkontur oder als Spalt ausgebildet ist. Ein Wirbel verläuft über den äußeren, d.h. dem Rumpf 9 (nicht gezeigt) femgelegenen Endbereich 10 oder über die Profilfläche der Landeklappe 3. Das gleiche gilt für die dem Rumpf naheliegende Endfläche. Der Endbereich 10 umfasst typischerweise eine obere und eine untere Seitenkante 11a, 11b oder Kantenlinien sowie eine dazwischen liegende Profil-Seitenfläche 13, wie es in der Ausführungsform nach der Figur 1 vorgesehen und nach der Fig. 3 dargestellt ist. Der Endbereich 10 kann auch als Kanten- oder Endlinie 11 oder als Abschlusslinie der Klappe ausgebildet sein. In der Ausführungsform nach der Figur 1 ist die Landeklappe 3 je nach seiner momentanen Ausfahrposition zu einem Teil seiner Flügeltiefe in einem Ausschnitt 15 des Flügels 5 gelegen, so dass sich zwischen der Kantenlinie 11 bzw. den Kantenlinien 11a, 11b der Landeklappe 3 und einer dieser gegenübertiegenden Seitenkante 17 des Ausschnitts 15 des Flügels 5 ein Spalt 19 ergibt. An dem äußeren Endbereich 10 sind die erfindungsgemäßen Wirbelgeneratoren 1 angeordnet. Sie können zusätzlich auch an dem inneren, d.h. dem Rumpf 9 zugewandten Endbereich 10 der Landeklappe 3 vorgesehen sein. Die Anbringung von Wirbelgeneratoren 1 muss nicht nur für Landeklappen vorgesehen sein, sondern können auch allgemein bei Steuerflächen, wie Spoilern oder Rudern, auf vortellhafte Weise eingesetzt sein. Auch diese weisen einen äußeren und einen inneren Endbereich 10 auf, an denen die Wirbelgeneratoren 1 vorzusehen sind. Sie können auch an der Hinterkante der jeweiligen Steuerfläche, bzw. an der Hinterkante der Hauptflügel, sowie insbesondere an den beiden Endkanten der Vorflügel akustisch wirksam angebracht werden.

Die Wirbelgeneratoren 1 sind vorzugsweise im Inneren der Seitenfläche 13, also zwischen der oberen 11a und der unteren 11b Seitenkante befestigt. Sie können aber auch direkt an einer der Seitenkanten 11a, 11b oder an beiden angebracht sein.

Die Wirbelgeneratoren 1 erstrecken sich zumindest über zumindest einen Abschnitt 21 der Profiltiefe 20 oder über mehrere Abschnitte 21a, 21b, 21c. Der Abschnitt 21 bzw. die Abschnitte 21a, 21b, 21c erstrecken sich zumindest über ein Fünftel und vorzugsweise über Zweidrittel der Profiltiefe 20.

Die Wirbelgeneratoren 1 sind als Anordnung einer Mehrzahl von länglichen Elementen 31 ausgebildet. Diese können grundsätzlich jede Querschnittsform aufweisen, also z. B. einen kreisförmigen, oval gestalteten oder rechteckförmigen Querschnitt haben. Der Querschnitt kann Ober deren Längsrichtung gleichbleibend oder veränderlich, z. B. verjüngend ausgebildet sein. Die länglichen Elemente 31 können flexibel gestaltet sein, so dass die Wirbelgeneratoren bürstenförmig gestaltet sind. Sie können aber auch starre Elemente aufweisen, also ein kammartiges Gebilde darstellen, wie es in der Ausführungsform der Figuren 1 und 2 gezeigt ist.

Die länglichen Elemente 31 ragen allgemein winklig zur Längsrichtung der Hochauftriebsklappe 3 von dem Endbereich 10 weg. Sie können dabei auch in der y-Richtung oder der Längsrichtung der Hochauftriebs-Klappe 3 verlaufen oder senkrecht auf der Profil-Seitenfläche 13 stehen, sofern bei der jeweiligen Ausführungsform der Hochauftriebs-Klappe 3 eine solche vorgesehen ist.

Der Abschnitt 21 oder die Abschnitte 21a, 21b, 21c sind aus einer Reihe von länglichen Elementen 31 oder mehreren Reihen von länglichen Elementen 31 gebildet. Es können auch mehrere nebeneinander verlaufenden Abschnitte 21 bzw. 21a, 21b, 21c vorgesehen sein, wobei diese insbesondere parallel zueinander verlaufen können.

Die Länge der länglichen Elemente 31 kann im Bereich zwischen 5 und 100 mm liegen, wobei sie vorzugsweise im Bereich zwischen 5 und 15 mm liegen.

Die Form, Gestaltung und Anzahl der Anordnungen von Wirbelgeneratoren 1 hängt im wesentlichen von der Geometrie des Flügels und der Hochauftriebs-Klappe 3, der für das Flugzeug relevanten Anstellwinkel und Klappenstellungen und Geschwindigkeiten ab und sind dem Anwendungsfall aufgrund der herrschenden aerodynamischen Vorgänge am Flügel mit Verfahren nach dem Stand der Technik anzupassen.

Der mittels der Wirbelgeneratoren 1 zu beeinflussende Wirbel wird bei Klappen, die - wie z. B. Spoilem - anders als bei der beschriebenen Landeklappe 3 als spezielle Form von Hochauftriebs-klappen, auf andere Art gebildet, jedoch verläuft auch dieser über eine Seilenkante der Klappe, so dass die vorgestellte Stellfläche mit Wirbelgeneratoren 1 auch bei andersartigen Klappen zu dem beabsichtigten Zweck an einem quer zur x- oder Längsrichtung der Klappe verlaufenden Endbereich vorsehen lässt. Ungeachtet dessen, können diese Wirbelgeneratoren 1 auch an den anderen vorgenannten Bereichen angeordnet werden.

## Patentansprüche

1. Stellfläche mit Wirbelgeneratoren zur Lärmminderung an Tragflügeln von Flugzeugen, insbesondere an tragflächenangelenkten oder -ausgefahrenen Klappen, mit an einer Profilfläche (10) dieser aerodynamisch angeströmten Stellfläche angeordneten Wirbelgeneratoren (1), **dadurch gekennzeichnet, dass** die Wirbelgeneratoren (1), die sich über zumindestens einen Abschnitt der Profiltiefe (20) der Stellfläche erstrecken, mit einer Mehrzahl von länglichen Elementen (31) realisiert ist, die entweder flexibel ausgebildet und bürstenförmig angeordnet sind oder die starr ausgebildet und kammartig angeordnet sind, welche an einer inneren und / oder an einer äußeren Profilfläche (10), die jeweils seitwärts der Stellfläche endseitig gelegen derer angeordnet ist und durch eine obere und eine untere Seitenkante (11b, 11a) eingegrenzt ist, innerhalb derer oder kantenrandseitlich befestigt sind, welche außerdem winklig zur Längsrichtung der Stellfläche und sich dieser entfemend positioniert sind, um während der Start- oder Landephase des Flugzeuges einem unvermeidbar aufgebauten Wirbelsystem durch die Zerlegung in eine Mehrzahl von kleineren Wirbeln die Wirbelenergie zu entziehen, ohne die Auftriebswirkung der Steilfläche zu verringern.

2. Stellfläche nach Anspruch 1, **dadurch gekennzeichnet, dass** die Querschnittsform der länglichen Elemente (31) kreisförmig, oval oder rechteckförmig ausgebildet ist, der vom Befestigungsort dieser Elemente (31) aus über deren Längsrichtung betrachtet gleichbleibend oder veränderlich, vorzugsweise verjüngend, gestaltet ist.

3. Stellfläche nach Anspruch 1, **dadurch gekennzeichnet, dass** die Wirbelgeneratoren (1) zumindestens einem Abschnitt (21) der Profilfläche (10) oder abschnittsweise der Profilfläche (10) mehreren nebengelegenen Abschnitten (21a, 21b, 21c), die zueinander beabstandet sind, angeordnet sind.

4. Stellfläche nach Anspruch 3, **dadurch gekennzeichnet, dass** der Abschnitt (21) oder die Abschnitte (21a, 21b, 21c) wenigstens über ein Fünftel oder über zwei Drittel der Profilfläche (10) einnehmen, welche(r) über die Länge der Profiltiefe (20) erstreckend angeordnet sind.

5. Stellfläche nach Anspruch 1, **dadurch gekennzeichnet, dass** die Stellfläche eine Klappe jeder bekannten Art ist, die am Tragflügel des Flugzeuges angeordnet ist, die als Spoiler, Landeklappe, Vorflügel oder Querruder eingesetzt ist.

6. Stellfläche nach den Ansprüchen 1 und 5, **dadurch gekennzeichnet, dass** die Wirbelgeneratoren an der Hinterkante der jeweiligen Steuerfläche oder an der Hinterkante des Tragflügels angeordnet sind.

7. Stellfläche nach den Ansprüchen 1 und 5, **dadurch gekennzeichnet, dass** die Wirbelgeneratoren an den Endkanten des Vorflügels angeordnet sind.

## Claims

1. Control surface with vortex generators for reducing the noise at wings of aircraft, in particular at flaps which are articulated to or extended at aerofoils, with vortex generators (1) which are disposed at a profile surface (10) of this control surface, which is subject to an aerodynamic flow, **characterised in that** the vortex generators (1), which extend over at least a portion of the profile depth (20) of the control surface, are implemented with a plurality of elongated elements (31) which are either flexible and disposed in the form of brushes or rigid and disposed in a comb-like manner, which elements are fastened to an inner and/or to an outer profile surface (10), which in each case is disposed laterally of the control surface at the end thereof and defined by an upper and a lower side edge (11b, 11a), are fastened within these or laterally of the edge and are in addition positioned at an angle to the longitudinal direction of the control surface and remote from this in order to extract the vortex energy during the starting or landing phase of the aircraft from a vortex system, which has inevitably built up, through decomposition into a plurality of smaller vortices without reducing the lifting effect of the control surface.

2. Control surface according to Claim 1, **characterised in that** the cross-sectional shape of the elongated elements (31) is circular, oval or rectangular and, viewed from the fastening location of these elements (31) over the longitudinal direction thereof, is formed so as to be constant or variable, preferably tapered.

3. Control surface according to Claim 1, **characterised in that** the vortex generators (1) are disposed at least one portion (21) of the profile surface (10) or, in terms of portions of the profile surface (10), a plurality of adjacent portions (21a, 21b, 21c), which are spaced apart.

4. Control surface according to Claim 3, **characterised in that** the portion (21) or the portions (21a, 21b, 21c) extend at least over one fifth or over two thirds of the profile surface (10), which portion(s) is/are disposed so as to extend over the length of the profile depth (20).

5. Control surface according to Claim 1, **characterised in that** the control surface is a flap of any known type which is disposed at the wing of the aircraft and is used as a spoiler, a landing flap, a slat or an aileron.

6. Control surface according to Claims 1 and 5, **characterised in that** the vortex generators are disposed at the trailing edge of the respective control surface or at the trailing edge of the wing.

7. Control surface according to Claims 1 and 5, **characterised in that** the vortex generators are disposed at the end edges of the slat.

## Revendications

1. Plan réglable muni de générateurs de turbulence permettant de réduire le bruit au niveau des ailes d'aéronefs, plus particulièrement au niveau des volets articulés sur l'aile ou sortants, comprenant des générateurs de turbulence (1) disposés sur une surface de profil (10) sollicitée aérodynamiquement dudit plan réglable, **caractérisée par le fait que** les générateurs de turbulence (1) qui s'étendent sur au moins une portion de la profondeur de profil (20) sont réalisés sous la forme d'une pluralité d'éléments (31) allongés qui, soit sont flexibles avec une conformation en brosse, soit sont rigides avec une conformation en peigne, et sont fixés à une surface de profil (10) intérieure et/ou extérieure située sur le côté du plan réglable, côté extrémité de celui-ci, délimitée par des arêtes latérales supérieure et inférieure (11b, 11a), entre lesdites arêtes ou le long de l'arête et qui en outre sont positionnés de manière à former un angle par rapport à la direction longitudinale du plan réglable en s'éloignant de celui-ci, afin pendant la phase de décollage ou d'atterrissage de l'avion de prélever par décomposition en une pluralité de petites turbulences l'énergie de turbulence d'un système turbulent inévitable sans pour autant diminuer l'effet de portance de la surface réglable.

2. Plan réglable selon la revendication 1. **caractérisé par le fait que** la forme en section transversale des éléments (31) allongés est circulaire, ovale ou rectangulaire, lesquels éléments vu de leur point de fixation dans la direction longitudinale ont une section transversale constante ou variable, de préférence effilée.

3. PLan réglable selon la revendication 1, **caractérisé par le fait que** les générateurs de turbulence (1) sont disposés sur au moins une portion (21) de la surface de profil (10) ou de manière fragmentée en plusieurs portions (21a, 21b, 21c) disposées les unes à côté des autres, à distance les unes des autres.

4. Plan réglable selon la revendication 3, **caractérisé par le fait que** la portion (21) ou les portions (21a, 21b, 21c) occupent au moins un tiers de la surface de profil et s'étend(ent) sur la longueur de la profondeur de profil (20).

5. Plan réglable selon la revendication 1, **caractérisé par le fait que** le plan réglable est un volet de tout type connu qui est disposé sur l'aile d'un aéronef et est utilisé comme spoiler, volet d'atterrissage, bec de bord d'attaque ou gouverne.

6. Plan réglable selon les revendications 1 et 5, **caractérisé par le fait que** les générateurs de turbulence sont disposés sur le bord arrière de la surface de commande concernée ou sur le bord arrière de l'aile.

7. Plan réglable selon les revendications 1 et 5, **caractérisé par le fait que** les générateurs de turbulence sont disposés sur les bords d'extrémité du bec de bord d'attaque.
